# EUROPÄISCHE PATENTSCHRIFT

(11) **EP 1 563 949 B1**
(45) Veröffentlichungstag und Bekanntmachung des Hinweises auf die Patenterteilung: **16.08.2006**
(21) Anmeldenummer: 05002764.8
(22) Anmeldetag: 10.02.2005
(51) Int. Cl.: B23Q 7/04, B23Q 3/157

(54) **Werkzeuggreifer mit Antriebsmittel zum Drehen des Werkzeugs**
Tool gripper with means for rotating the tool
Pince à outil avec des moyens de rotation de l'outil

(30) Priorität: 10.02.2004 DE 102004006352
(43) Veröffentlichungstag der Anmeldung: 17.08.2005
(73) Patentinhaber: E.Zoller GmbH & Co.KG Einstell-und Messgeräte, 71691 Freiberg/Neckar (DE)
(72) Erfinder: Pfau, Christian, 74321 Bietigheim-Bissingen (DE); Buttau, Dieter, 74379 Ingersheim (DE)
(74) Vertreter: Heyerhoff, Markus

(56) Entgegenhaltungen:
- DE-A1- 10 131 352
- US-A- 4 810 019
- US-B1- 6 293 742

## Beschreibung

### Stand der Technik

Die Erfindung betrifft einen Werkzeuggreifer mit einer Greifereinheit zum Greifen eines Werkzeugs und einem Antriebsmittel zum Drehen des gegriffenen Werkzeugs um eine Rotationsachse des Werkzeugs.

Aus der DE 101 31 352 A1 ist eine solche Vorrichtung zum Einschrumpfen eines Werkzeugs in ein Werkzeugfutter auf ein Sollmaß bekannt, bei der das Werkzeug mit Hilfe eines Werkzeuggreifers aus einem Magazin entnommen und in ein Werkzeugfutter eingesetzt wird. Hierzu weist der Werkzeuggreifer drei Greifelemente mit jeweils einem als Rolle ausgestalteten Greifkörper auf, zwischen denen das Werkzeug gehalten wird. Einer dieser Greifkörper ist drehend antreibbar, so dass das gegriffene Werkzeug vor einer Kamera gedreht werden kann zur Bestimmung der Positionen der Schneiden des Werkzeugs.

Der Erfindung liegt insbesondere die Aufgabe zugrunde, einen Werkzeuggreifer für eine Vorrichtung zum Einschrumpfen eines Werkzeugs in einem Werkzeugfutter anzugeben, der eine verbesserte Handhabbarkeit aufweist. Diese Aufgabe wird gemäß der Erfindung durch die Merkmale des Anspruchs 1 gelöst. Weitere Ausgestaltungen ergeben sich aus den Unteransprüchen.

### Vorteile der Erfindung

Die Erfindung geht aus von einem Werkzeuggreifer mit einer Greifereinheit zum Greifen eines Werkzeugs und einem Antriebsmittel zum Drehen des gegriffenen Werkzeugs um eine Rotationsachse des Werkzeugs.

Es wird vorgeschlagen, dass die Greifereinheit zwei Greifkörper umfasst, zwischen denen das Werkzeug von außerhalb der Greifereinheit senkrecht zur Rotationsachse des Werkzeugs in eine Greifposition hindurchführbar ist.

Die Erfindung geht von der Überlegung aus, dass ein Werkzeugfutter vor dem Einschrumpfen eines Werkzeugs erwärmt werden muss. Diese Erwärmung geschieht üblicherweise mit Hilfe einer als Induktionseinheit ausgeführten Heizeinrichtung, die von oben über das Werkzeugfutter gefahren wird. Eine einfache Einschrumpfvorrichtung mit wenig beweglichen Elementen kann erreicht werden, wenn die Heizeinrichtung oberhalb des Werkzeugfutters ihre Ruheposition hat. Es bleibt auf diese Weise zwischen dem Werkzeugfutter und der Heizeinrichtung nur ein begrenzter Raum, der für Bewegungen eines Werkzeuggreifers zum Einsetzen des Werkzeugs in das Werkzeugfutter zur Verfügung steht.

Die Erfindung geht von der weiteren Überlegung aus, dass Werkzeuge in dem begrenzten Raum zwischen Heizeinrichtung und Werkzeugfutter besonders einfach eingesetzt werden können, wenn der Werkzeuggreifer nach dem Einsetzen des Werkzeugs in das Werkzeugfutter seitlich vom Werkzeug weggefahren werden kann. Eine solche Bewegungsfreiheit wird durch zwei Greifkörper erreicht, zwischen denen das Werkzeug senkrecht zur Rotationsachse des Werkzeugs hindurchführbar ist. Der Werkzeuggreifer muss nach dem Einsetzen des Werkzeugs nicht mehr über das Werkzeug gehoben werden, wodurch besonders lange Werkzeuge in das Werkzeugfutter eingesetzt werden können. Die Greifposition ist eine Position des Werkzeugs, in die es gebracht wird, um dort von den Greifkörpern gegriffen zu werden. Die Greifposition ist zweckmäßigerweise zwischen den Greifkörpern des Werkzeuggreifers, insbesondere im Zentrum eines Greifkreises, auf dem Rotationsachsen der Greifkörper sowohl in geöffneter als auch in greifender Stellung des Werkzeuggreifers angeordnet sind.

Zusätzlich zu den beiden Greifkörpern zum Greifen des Werkzeugs kann ein dritter Greifkörper und gegebenenfalls weitere Greifkörper zum sicheren und wackelfreien Greifen des Werkzeugs vorgesehen sein. Eine einfache, kompakte und stabile Konstruktion des Werkzeuggreifers kann erreicht werden, wenn die beiden Greifkörper jeweils an einem Greifelemente gelagert sind, das um eine Drehachse schwenkbar ist.

Vorteilhafterweise umfasst der Werkzeuggreifer ein Führmittel, das zum konzentrischen Hinbewegen der Greifkörper auf die Greifposition zu vorgesehen ist. Der Werkzeuggreifer als Ganzes kann hierdurch in eine Arbeitsposition zum Greifen gebracht werden, die unabhängig vom Werkzeugdurchmesser ist. Der Werkzeuggreifer wird in seine Arbeitsposition bewegt, in der die Greifelemente konzentrisch um die Rotationsachse des Werkzeugs angeordnet sind. Aus dieser Position können die Greifkörper konzentrisch zum Werkzeug in Greifposition hinbewegt werden, bis sie eine Stellung erreichen, in der das Werkzeug stabil gegriffen ist.

Das Führmittel kann eine elektronische Steuereinheit zur Steuerung der Greifbewegung der Greifkörper sein. Ein preiswerter und fehlerunanfälliger Werkzeuggreifer kann durch ein mechanisches Mittel als Führmittel erreicht werden.

Eine einfache Steuerung und präzise Führung der Greifkörper kann mit Hilfe eines Führmittels erreicht werden, durch das mindestens drei Greifkörper mit einem einzigen Antrieb konzentrisch auf die Greifposition zu führbar sind. Das Führmittel kann beispielsweise einen translatorisch bewegbaren Schlitten umfassen, durch dessen Bewegung zwei schwenkbare Greifelemente bewegt, beispielsweise gedrückt werden, und dadurch deren Greifkörper auf die Greifposition zu bewegt werden. Ein dritter Greifkörper kann am Schlitten angeordnet sein und durch die Bewegung des Schlittens zur Greifposition hin gefahren werden.

Zur gewünschten Ausrichtung des Werkzeugs vor einer Kamera ist das Werkzeug zweckmäßigerweise im gegriffenen Zustand drehbar gelagert. Hierfür kann ein Greifkörper durch das Antriebsmittel antreibbar sein. Der Greifkörper dient hierbei sowohl zum Greifen und Halten des Werkzeugs als auch zum drehbaren Antreiben des Werkzeugs. Hierzu ist der Greifkörper vorteilhafterweise rotationssymmetrisch und zur Anlage an das zu greifende Werkzeug ausgestaltet. Der Greifkörper kann insbesondere ein mittig gelagertes Greifrad sein, das in Form eines Zylinders, eines bauchigen Fasses, eines Toroids, eines Rotationsellipsoids usw. haben kann.

In einer weiteren Ausgestaltung der Erfindung umfasst das Antriebsmittel einen Antriebsmotor mit einer Antriebswelle, deren Rotationsachse versetzt zu einer Rotationsachse des Greifkörpers ist. Hierdurch kann ein Werkzeug dicht an der Rotationsachse des Greifkörpers gehalten sein, ohne vom Antriebsmotor in seiner Längenausdehnung begrenzt zu sein, was insbesondere bei langen Werkzeugen von Vorteil ist.

Eine besonders präzise Steuerung der Bewegung des Greifkörpers kann erreicht werden, wenn das Antriebsmittel einen Antriebsmotor mit einer Antriebswelle umfasst, deren Rotationsachse parallel zu einer Rotationsachse des Greifkörpers ist. Es ist keine Richtungsveränderung der Rotationsbewegung, beispielsweise durch ein Kegelradpaar, notwendig, durch das ein unerwünschtes Spiel zwischen der Antriebswelle und dem Greifkörper erzeugt wird.

In einer weiteren Ausgestaltung der Erfindung wird vorgeschlagen, dass der Werkzeuggreifer einen Zahnriemen zur Übertragung einer Antriebskraft von der Antriebswelle zum Greifkörper umfasst. Durch einen Zahnriemen kann eine spielfreie Kraftübertragung erfolgen. Die Übertragung muss nicht unmittelbar bis ganz zum Greifkörper erfolgen, sondern kann durch den Zahnriemen beispielsweise bis zu einer Greiferwelle des Greifkörpers erbracht werden.

Es wird außerdem vorgeschlagen, dass das Antriebsmittel einen Antriebsmotor umfasst, der starr mit einem einen Greifkörper tragenden Greifmittel verbunden ist. Dieses Greifelement kann bewegt werden, ohne dass der Kraftübertragungsweg vom Antriebsmotor zu einem Greifkörper des Greifelements verändert werden müsste. Es kann eine präzise Bewegung des Greifkörpers erreicht werden.

Ein weiterer Vorteil der Erfindung wird erreicht, wenn ein Greifelement einen durch das Antriebsmittel antreibbaren und eine Rotationsachse aufweisenden Greifkörper umfasst, wobei die Rotationsachse schräg zur Rotationsachse eines gegriffenen Werkzeugs ausgerichtet ist. Üblicherweise wird ein Werkzeug vor der Kamera gedreht, das parallel zur Richtung der Schwerebeschleunigung ausgerichtet ist. Bei einer solchen Drehung wird das Werkzeug durch sein Gewicht ein Stück weit in Richtung der Schwerebeschleunigung gezogen. Um einer solchen ungewollten Positionsveränderung des Werkzeugs vor der Kamera entgegenzuwirken, muss eine ausgleichende Kraft auf das Werkzeug aufgebracht werden. Dies kann durch einen schräg ausgerichteten Greifkörper erreicht werden, der durch seine Rotation das Werkzeug etwas entgegen der Schwerebeschleunigung drückt. Zweckmäßigerweise ist die Schräge der Rotationsachse des Greifkörpers einstellbar, insbesondere durch eine Steuereinheit einstellbar, wodurch der auf das Werkzeug aufgebrachte Auftrieb an das Werkzeuggewicht angepasst werden kann, das der Steuereinheit durch eingespeicherte Werkzeugdaten bekannt ist.

Zweckmäßigerweise umfasst der Werkzeuggreifer mindestens zwei Greifelemente mit jeweils einem Greifkörper, deren Rotationsachse schräg zueinander ausgerichtet ist. Hierdurch kann dem Werkzeug von mehreren Seiten Auftrieb gegeben werden.

In einer weiteren Ausgestaltung der Erfindung umfasst der Werkzeuggreifer ein Greifelement mit einem eine Rotationsachse aufweisenden Greifkörper, der durch ein Lager mit in Axialrichtung versetzten Lagerkörpern gelagert ist. Bei einem Drehen des Werkzeugs vor der Kamera ist die Rotationsachse des Werkzeugs möglichst stabil zu halten. Eine solche Stabilität kann erreicht werden, wenn auch die Rotationsachse des Greifkörpers stabil gegen ein Verkippen ist. Ein Lager mit in Axialrichtung versetzten Lagerkörpern kann den Greifkörper besonders kippstabil halten, wodurch auch bei einem mäßigen Verschleiß des Lagers eine hohe Vermessungsgenauigkeit des Werkzeugs erreicht werden kann. Das Lager weist beispielsweise zwei in Axialrichtung versetzte Lagerkugelkränze auf oder umfasst zwei in Axialrichtung voneinander beabstandete Lagerelemente. Vorteilhafterweise ist das Lager mit in Axialrichtung versetzten Lagerkörpern an einem antriebsfreien, also nicht angetriebenen Greifkörper angeordnet.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: einen Werkzeuggreifer in einer geöffneten Stellung in einer Draufsicht,
- Fig. 2: eine Schnittdarstellung durch den Werkzeuggreifer aus Figur 1,
- Fig. 3: eine Teilansicht des Werkzeuggreifers und
- Fig. 4: eine geschnittene Darstellung eines Greifelements über einem Werkzeugfutter.

### Beschreibung des Ausführungsbeispiels

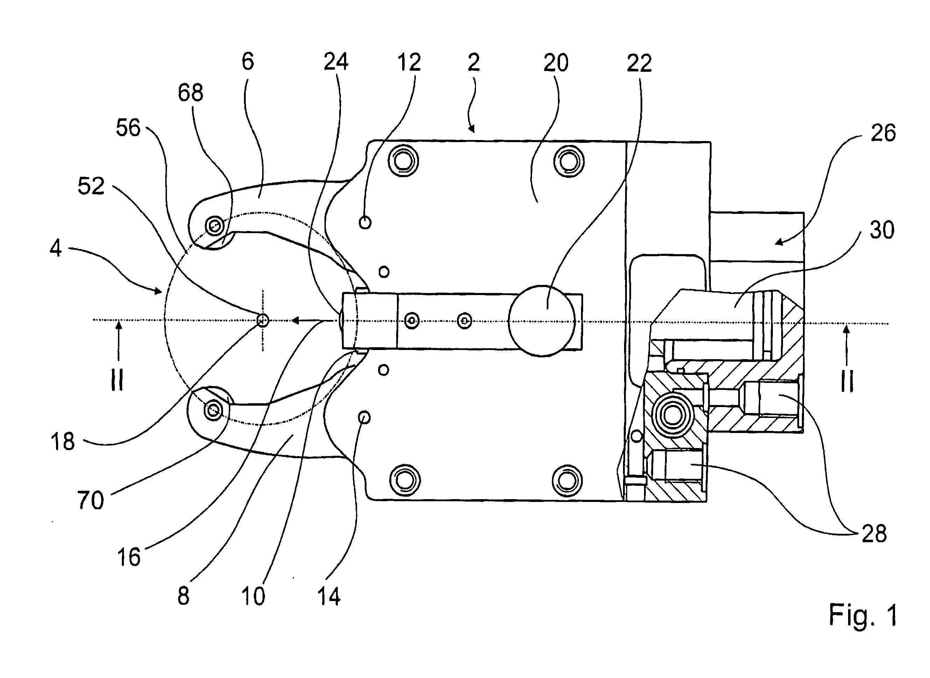

Figur 1 zeigt einen Werkzeuggreifer 2 in einer Draufsicht. Der Werkzeuggreifer 2 umfasst eine Greifereinheit 4 mit drei Greifelementen 6, 8, 10. Die Greifelemente 6,8 sind als jeweils um eine Drehachse 12, 14 drehbar ausgeführte Schwenkarme ausgestaltet. Das dritte Greifelement 10 ist durch eine translatorische Bewegung in einer Greifrichtung 16 auf ein Greifzentrum 18 zuführbar. Oberhalb einer Deckplatte 20 des Werkzeuggreifers 2 ist ein Antriebsmotor als Antriebsmittel 22 angeordnet, der zum rotatorischen Antrieb eines zylinderförmigen Greifkörpers 24 des dritten Greifelements 10 vorgesehen ist.

Das dritte Greifelement 10 wird in einer Translationsbewegung in Greifrichtung 16 zum Greifzentrum 18 hin und von diesem weg bewegt. Diese Bewegung wird von einem pneumatischen Antrieb 26 erzeugt, der auf der rechten Seite von Figur 1 schematisch dargestellt ist. Der Antrieb 26 umfasst zwei Luftdruckanschlüsse 28 und einen Druckzylinder 30.

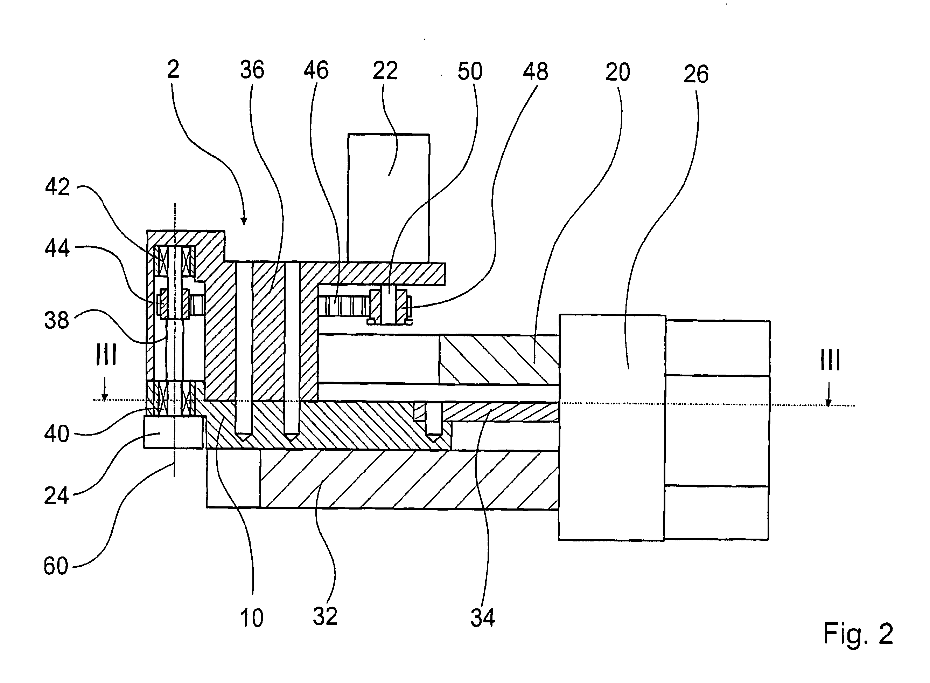

Figur 2 zeigt den Werkzeuggreifer 2 in einer geschnittenen Darstellung, wobei auf die Darstellung des Greifelements 6 im Hintergrund der Übersichtlichkeit halber verzichtet wurde. Zwischen einer Grundplatte 32 und der Deckplatte 20 ist das dritte Greifelement 10 nach rechts und links verschiebbar angeordnet. Durch ein Verbindungselement 34 ist das dritte Greifelement 10 mit dem schematisch dargestellten pneumatischen Antrieb 26 verbunden. Oberhalb des Greifelements 10 ist ein Halteelement 36 angeordnet, das den Antriebsmotor fest mit dem dritten Greifelement 10 verbindet. Vorne am dritten Greifelement 10 ist der rollenförmige Greifkörper 24 angeordnet und fest mit einer Greiferwelle 38 verbunden. Die Greiferwelle 38 ist mit Hilfe von zwei Lagern 40, 42 gehalten und mit einem Zahnrad 44 drehfest verbunden. Die Zähne des Zahnrads 44 greifen in einen Zahnriemen 46 ein, ebenso wie die Zähne eines Zahnrads 48 auf einer Antriebswelle 50 des Antriebsmittels 22. Der Zahnriemen 46 dient zur Übertragung einer Antriebskraft von der Antriebswelle 50 zur Greiferwelle 38 und damit zum Greifkörper 24 des dritten Greifelements 10.

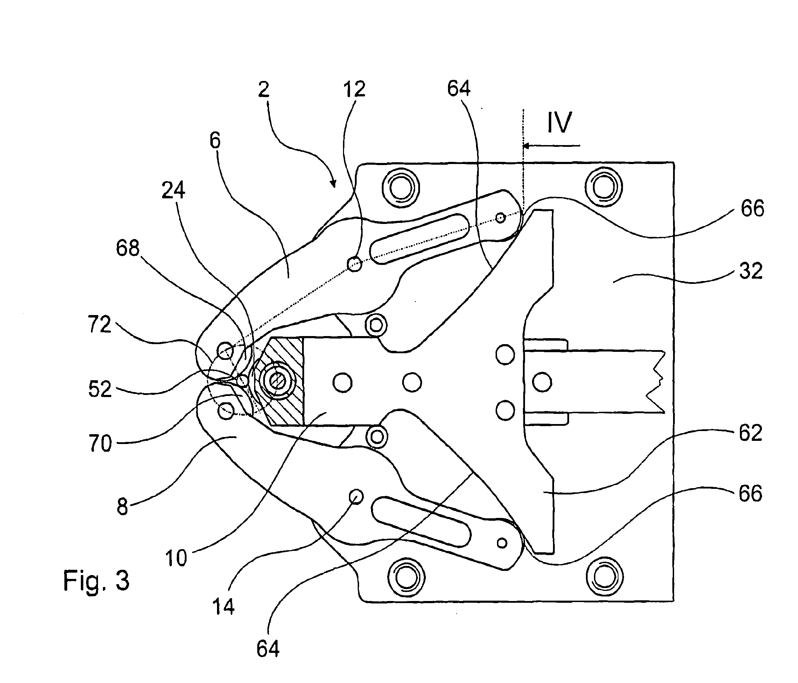

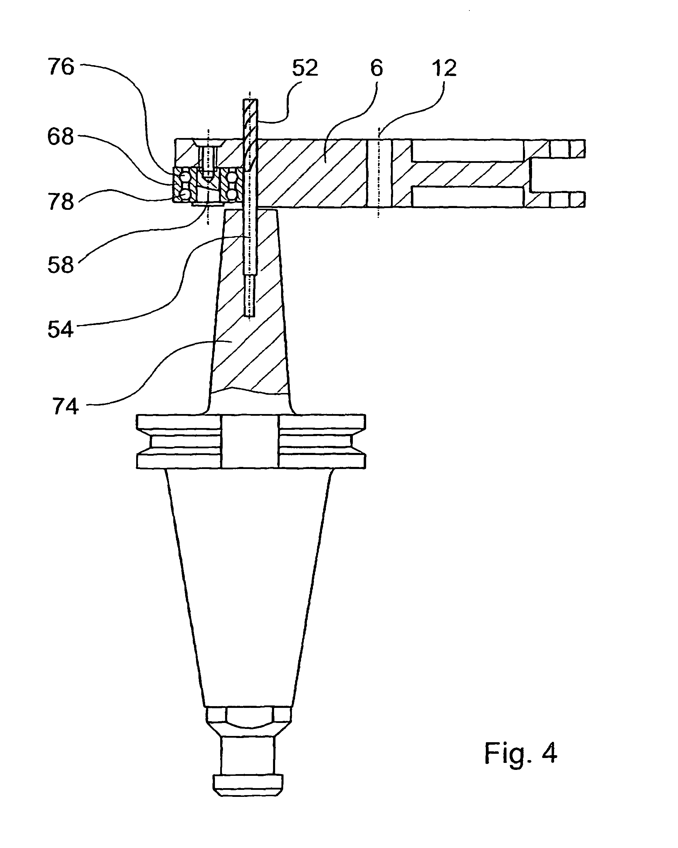

Zum Greifen eines Werkzeugs 52 wird zuerst der gesamte Werkzeuggreifer 2 beispielsweise in Greifrichtung 16 an das Werkzeug 52 herangefahren, bis das Greifzentrum 18 in der Rotationsachse 54 (Figur 4) des Werkzeugs 52 zu liegen kommt. Das Werkzeug 52 wird hierdurch zwischen rollenförmigen Greifkörpern 68, 70 der Greifelemente 6, 8 hindurchgeführt und zwar von außerhalb der Greifereinheit 2 senkrecht zur Rotationsachse 54 des Werkzeugs 52 in die Greifposition, in der die Rotationsachse 54 durch das Greifzentrum 18 verläuft. Das Greifzentrum 18 liegt hierbei in der Mitte eines Greiferkreises 56, der durch Rotationsachsen 58, 60 (Figur 2, Figur 4) der Greifkörper 24, 68, 70 führt. Nun wird durch die Betätigung des pneumatischen Antriebs 26 das dritte Greifelement 10 in Greifrichtung 16 geschoben. Hierbei werden die Greifelemente 6, 8 so geschwenkt, dass das Werkzeug 52 gegriffen wird. Das Verschwenken der Greifelemente 6, 8 bei einer Translationsbewegung des Greifelements 10 ist in Verbindung mit Figur 3 erläutert.

In Figur 3 sind die drei Greifelemente 6, 8, 10 in einer Draufsicht zusammen mit der Grundplatte 32 dargestellt. Das dritte Greifelement 10 umfasst an seiner dem Werkzeug 52 abgewandten Seite ein als Schwalbenschwanz ausgeführtes Führmittel 62 mit zwei von oben als Linien dargestellten Ablaufflächen 64. An diesen Ablaufflächen 64 liegt jeweils eine Rolle 66 der Greifelemente 6, 8 an. Bei einem Verschieben des dritten Greifelements 10 in Greifrichtung 16 rollen die Rollen 66 entlang der Ablaufflächen 64 nach außen. Hierbei werden die Greifelemente 6, 8 um ihre Drehachsen 12, 14 verschwenkt, so dass die Greifkörper 68, 70 der Greifelemente 6, 8 nach innen bewegt werden.

Die Bewegung der Greifkörper 68, 70 erfolgt in der Weise, dass sie stets auf einem Greiferkreis 56, 72 angeordnet sind, dessen Zentrum stets mit dem Greifzentrum 18 zusammenfällt. Die drei Greifkörper 24, 68, 70 sind mit Hilfe des Führmittels 62 somit durch einen einzigen Antrieb 26 konzentrisch auf die Greifposition zu führbar. Diese stets konzentrische Anordnung der Rotationsachsen 58, 60 der Greifkörper 24, 68, 70 wird durch die Geometrie des Schwalbenschwanzes des Führmittels 62 in Verbindung mit der Geometrie der Greifelemente 6, 8 erreicht.

Zum Greifen des Werkzeugs 52, dessen Rotationsachse 54 durch das Greifzentrum 18 verläuft, berühren die Greifkörper 24, 68, 70 das Werkzeug 52 unabhängig von dessen Durchmesser stets gleichzeitig. Das Werkzeug 52 wird hierdurch nicht aus seiner Greifposition heraus verschoben.

Zum Drehen des Werkzeugs 52 vor einer nicht dargestellten Kamera kann nun der Antriebsmotor von einer nicht dargestellten Steuereinheit angesteuert werden, so dass die Antriebswelle 50 des Antriebsmotors in gewünschtem Umfang angetrieben wird. Hierdurch wird über die Zahnräder 44, 48 und den Zahnriemen 46 die Greiferwelle 38 und der Greifkörper 24 rotatorisch angetrieben. Das Werkzeug 52 kann sich im gegriffenen Zustand zwischen dem angetriebenen Greifkörper 24 und den frei nachlaufenden Greifkörpern 68, 70 drehen.

Bei einer solchen Drehung wird das Werkzeug 52 durch sein Eigengewicht etwas nach unten, in Figur 3 in die Papierebene hinein, gezogen. Zum Ausgleich dieser unerwünschten Bewegung ist die Rotationsachse 60 des Greifkörpers 24 etwas schräg zur Rotationsachse 54 des Werkzeugs 52 und zu den Rotationsachsen 58 der Greifkörper 68, 70 ausgerichtet. Die gewünschte Schräge der Rotationsachse 60 wird durch einen nicht dargestellten Piezo-Antrieb erreicht, mit dem das in Figur 2 gezeigte Lager 42 etwas aus der Papierebene heraus- oder in die Papierebene hereingedrückt werden kann, so dass die Rotationsachse 60 um bis zu 2° verkippbar ist. Der notwendige Verfahrweg des Lagers 42 von etwas über 1 mm kann durch ein den Hub des Piezo-Antriebs verstärkendes handelsübliches Piezo-Getriebe erreicht werden. Der Piezo-Antrieb und das Piezo-Getriebe sind in Figur 2 hinter der Greiferwelle 38 angeordnet. Der Antrieb der Greiferwelle 38 wird von der notwendigen Bewegungsfreiheit des Lagers 42 nicht gestört, da der Zahnriemen 46 selbständig der - durch die Bewegung des Lagers 42 erzwungenen - Bewegung des Zahnrads 44 nachgeführt wird.

Nach einer beispielsweise erfolgten Erfassung von Positionen von Schneiden des Werkzeugs 52 kann das Werkzeug 52 beispielsweise in ein erwärmtes Werkzeugfutter 74 eingeführt und dort in einer gewünschten Soll-Position vom Werkzeuggreifer 2 festgehalten werden. Eine solche Positionierung des Werkzeugs 52 im Werkzeugfutter 74 ist in Figur 4 dargestellt. Zusätzlich zeigt Figur 4 das Greifelement 6 und den Greifkörper 68 in einer geschnittenen Darstellung. Der Schnitt verläuft krummlinig durch die Darstellung in Figur 3.

In Figur 4 ist der Greifkörper 68 geschnitten dargestellt. Der Greifkörper 68 ist als ein Greifrad ausgestaltet, das mit zwei als Kugellagerkränze ausgeführten Lagerkörpern 76, 78 gelagert ist. Die Lagerkörper 76, 78 sind in Axialrichtung der Rotationsachse 58 um etwa 5 mm versetzt voneinander angeordnet sind. Der Greifkörper 68 ist hierdurch besonders stabil gegen ein Verkippen gelagert.

### Bezugszeichen

- 2: Werkzeuggreifer
- 4: Greifereinheit
- 6: Greifelement
- 8: Greifelement
- 10: Greifelement
- 12: Drehachse
- 14: Drehachse
- 16: Greifrichtung
- 18: Greifzentrum
- 20: Deckplatte
- 22: Antriebsmittel
- 24: Greifkörper
- 26: Antrieb
- 28: Luftdruckanschluss
- 30: Druckzylinder
- 32: Grundplatte
- 34: Verbindungselement
- 36: Halteelement
- 38: Greiferwelle
- 40: Lager
- 42: Lager
- 44: Zahnrad
- 46: Zahnriemen
- 48: Zahnrad
- 50: Antriebswelle
- 52: Werkzeug
- 54: Rotationsachse
- 56: Greiferkreis
- 58: Rotationsachse
- 60: Rotationsachse
- 62: Führmittel
- 64: Ablauffläche
- 66: Rolle
- 68: Greifkörper
- 70: Greifkörper
- 72: Greiferkreis
- 74: Werkzeugfutter
- 76: Lagerkörper
- 78: Lagerkörper

## Patentansprüche

1. Werkzeuggreifer (2) mit einer Greifereinheit (4) zum Greifen eines Werkzeugs (52) und einem Antriebsmittel (22) zum Drehen des gegriffenen Werkzeugs (52) um eine Rotationsachse (54) des Werkzeugs (52),
**dadurch gekennzeichnet, dass** die Greifereinheit (4) zwei Greifkörper (68, 70) umfasst, zwischen denen das Werkzeug (52) von außerhalb der Greifereinheit (4) senkrecht zur Rotationsachse (54) in eine Greifposition hindurchführbar ist.

2. Werkzeuggreifer (2) nach Anspruch 1,
**gekennzeichnet durch** ein Führmittel (62), das zum konzentrischen Hinbewegen der Greifkörper (68, 70) auf die Greifposition zu vorgesehen ist.

3. Werkzeuggreifer (2) nach Anspruch 2,
**dadurch gekennzeichnet, dass** das Führmittel (62) ein mechanisches Mittel ist.

4. Werkzeuggreifer (2) nach Anspruch 2 oder 3,
**dadurch gekennzeichnet, dass** mindestens drei Greifkörper (24, 68, 70) mit Hilfe des Führmittels (62) durch einen einzigen Antrieb (62) konzentrisch auf die Greifposition zu führbar sind.

5. Werkzeuggreifer (2) nach einem der vorhergehenden Ansprüche,
**dadurch gekennzeichnet, dass** ein Greifkörper (24) durch das Antriebsmittel (22) antreibbar ist.

6. Werkzeuggreifer (2) nach Anspruch 5,
**dadurch gekennzeichnet, dass** das Antriebsmittel (22) einen Antriebsmotor mit einer Antriebswelle (50) umfasst, deren Rotationsachse versetzt zu einer Rotationsachse (60) des Greifkörpers (24) ist.

7. Werkzeuggreifer (2) nach Anspruch 6,
**gekennzeichnet durch** einen Zahnriemen (46) zur Übertragung einer Antriebskraft von der Antriebswelle (50) zum Greifkörper (24).

8. Werkzeuggreifer (2) nach einem der vorhergehenden Ansprüche,
**dadurch gekennzeichnet, dass** das Antriebsmittel (22) einen Antriebsmotor umfasst, der starr mit einem einen Greifkörper (24) tragenden Greifelement (10) verbunden ist.

9. Werkzeuggreifer (2) nach einem der vorhergehenden Ansprüche,
**gekennzeichnet durch** ein Greifelement (10) mit einem **durch** das Antriebsmittel (22) antreibbaren, eine Rotationsachse (60) aufweisenden Greifkörper (24), wobei die Rotationsachse (60) schräg zur Rotationsachse (54) eines gegriffenen Werkzeugs (52) ausgerichtet ist.

10. Werkzeuggreifer (2) nach einem der vorhergehenden Ansprüche,
**gekennzeichnet durch** ein Greifelement (6, 8) mit einem eine Rotationsachse (58) aufweisenden Greifkörper (68, 70), der **durch** ein Lager mit in Axialrichtung versetzten Lagerkörpern (76, 78) gelagert ist.

## Claims

1. Tool gripper (2) having a gripper unit (4) for gripping a tool (52) and a drive means (22) for rotating the gripped tool (52) about a rotation axis (54) of the tool (52), **characterized in that** the gripper unit (4) comprises two gripping bodies (68, 70), between which the tool (52) can be passed through from outside the gripper unit (4) perpendicularly to the rotation axis (54) into a gripping position.

2. Tool gripper (2) according to Claim 1, **characterized by** a guide means (62) which is provided for moving the gripping bodies (68, 70) concentrically towards the gripping position.

3. Tool gripper (2) according to Claim 2, **characterized in that** the guide means (62) is a mechanical means.

4. Tool gripper (2) according to Claim 2 or 3, **characterized in that** at least three gripping bodies (24, 68, 70) can be directed concentrically towards the gripping position by means of the guide means (62) by a single drive (62).

5. Tool gripper (2) according to one of the preceding claims, **characterized in that** a gripping body (24) can be driven by the drive means (22).

6. Tool gripper (2) according to Claim 5, **characterized in that** the drive means (22) comprises a drive motor having a drive shaft (50), the rotation axis of which is offset from a rotation axis (60) of the gripping body (24).

7. Tool gripper (2) according to Claim 6, **characterized by** a toothed belt (46) for transmitting a drive force from the drive shaft (50) to the gripping body (24).

8. Tool gripper (2) according to one of the preceding claims, **characterized in that** the drive means (22) comprises a drive motor which is rigidly connected to a gripping element (10) carrying a gripping body (24).

9. Tool gripper (2) according to one of the preceding claims, **characterized by** a gripping element (10) having a gripping body (24) which can be driven by the drive means (22) and has a rotation axis (60), the rotation axis (60) being oriented obliquely relative to the rotation axis (54) of a gripped tool (52).

10. Tool gripper (2) according to one of the preceding claims, **characterized by** a gripping element (6, 8) having a gripping body (68, 70) which has a rotation axis (58) and which is mounted by a bearing having bearing elements (76, 78) offset in the axial direction.

## Revendications

1. Pince à outil (2) comprenant une unité de préhension (4) pour saisir un outil (52) et un moyen d'entraînement (22) pour faire tourner l'outil saisi (52) autour d'un axe de rotation (54) de l'outil (52),
**caractérisée en ce que**
l'unité de préhension (4) comprend deux corps de préhension (68, 70) entre lesquels on peut faire passer l'outil (52) depuis l'extérieur de l'unité de préhension (4) perpendiculairement à l'axe de rotation (54) dans une position de préhension.

2. Pince à outil (2) selon la revendication 1,
**caractérisée par**
un moyen de guidage (62) qui doit être prévu pour l'avance concentrique des corps de préhension (68, 70) dans la position de préhension.

3. Pince à outil (2) selon la revendication 2,
**caractérisée en ce que**
le moyen de guidage (62) est un moyen mécanique.

4. Pince à outil (2) selon la revendication 2 ou 3,
**caractérisée en ce qu'**
au moins trois corps de préhension (24, 68, 70) peuvent être guidés à l'aide du moyen de guidage (62) par un entraînement unique (62) concentriquement à la position de préhension.

5. Pince à outil (2) selon l'une quelconque des revendications précédentes,
**caractérisée en ce qu'**
un corps de préhension (24) peut être entraîné par le moyen d'entraînement (22).

6. Pince à outil (2) selon la revendication 5,
**caractérisée en ce que**
le moyen d'entraînement (22) comprend un moteur d'entraînement avec un arbre d'entraînement (50), dont l'axe de rotation est décalé par rapport à un axe de rotation (60) du corps de préhension (24).

7. Pince à outil (2) selon la revendication 6,
**caractérisée par**
une courroie dentée (46) pour le transfert d'une force d'entraînement de l'arbre d'entraînement (50) au corps de préhension (24).

8. Pince à outil (2) selon l'une quelconque des revendications précédentes,
**caractérisée en ce que**
le moyen d'entraînement (22) comprend un moteur d'entraînement qui est connecté rigidement à un élément de préhension (10) portant un corps de préhension (24).

9. Pince à outil (2) selon l'une quelconque des revendications précédentes,
**caractérisée par**
un élément de préhension (10) avec un corps de préhension (24) pouvant être entraîné par le moyen d'entraînement (22) et présentant un axe de rotation (60), l'axe de rotation (60) étant orienté obliquement par rapport à l'axe de rotation (54) d'un outil saisi (52).

10. Pince à outil (2) selon l'une quelconque des revendications précédentes,
**caractérisée par**
un élément de préhension (6, 8) avec un corps de préhension (68, 70) présentant un axe de rotation (58), qui est supporté par un palier avec des corps de palier (76,78) décalés dans la direction axiale.
